# EUROPÄISCHE PATENTSCHRIFT

(11) **EP 1 623 135 B1**
(45) Veröffentlichungstag und Bekanntmachung des Hinweises auf die Patenterteilung: **28.10.2009**
(21) Anmeldenummer: 04730850.7
(22) Anmeldetag: 03.05.2004
(51) Int. Cl.: F16D 65/12

(54) **BREMSSCHEIBE MIT EINEM REIBRING UND EINEM ANBINDUNGSELEMENT**
BRAKE DISK COMPRISING A FRICTION RING AND A LINKING ELEMENT
DISQUE DE FREIN A BAGUE DE FRICTION ET A ELEMENT DE RACCORDEMENT

(30) Priorität: 14.05.2003 DE 10321795
(43) Veröffentlichungstag der Anmeldung: 08.02.2006
(73) Patentinhaber: Daimler AG, 70327 Stuttgart (DE)
(72) Erfinder: SCHLITZ, Helmut, 71157 Hildrizhausen (DE); RIEDEL, Hans-Georg, 75177 Pforzheim (DE); SPANGEMACHER, Björn, 71069 Sindelfingen (DE)
(74) Vertreter: JENSEN & SON
(86) Internationale Anmeldenummer: PCT/EP2004/004652
(87) Internationale Veröffentlichungsnummer: WO 2004/102025

(56) Entgegenhaltungen:
- WO-A-02/38979
- DE-U- 9 422 141
- US-A- 6 139 215
- US-A1- 2002 157 908
- US-B1- 6 267 210

## Beschreibung

Die Erfindung betrifft eine Bremsscheibe mit einem Reibring und einem Anbindungselement nach dem Oberbegriff des Anspruchs 1.

Eine derartige Bremsscheibe ist aus der WO02/38979 bekannt.

Die EP 0 987 462 A1 beschreibt eine Bremsscheibe mit einem Reibring und einem Anbindungselement, die durch eine Verschraubungsanordnung miteinander verbunden sind. Dabei umfasst die Verschraubungsanordnung eine Schraube mit einem Bolzen, ein Zwischenelement, eine Unterlegscheibe und eine Mutter. Dabei verläuft die Schraube mit dem Bolzen sowohl durch eine Bohrung des Anbindungselementes und durch eine Bohrung des Reibringes. Das Zwischenelement ist dabei so angeordnet, dass es eine Berührung zwischen dem Reibring und dem Anbindungselement verhindert. Der Nachteil dieser Anordnung besteht darin, dass weder eine axiale noch eine radiale Ausdehnung des Verbundes von Reibring und Anbindungselement gewährleistet ist.

In der DE 94 22 141 U1 wird ebenfalls eine Verschraubung von einem Reibring und einem Anbindungselement einer Bremsscheibe beschrieben. Hierbei wird die axiale Ausdehnung zwischen Reibring und Anbindungselement durch eine tellerfederförmige Unterlegscheibe unter dem Schraubenkopf gewährleistet. Der Nachteil dieser Erfindung besteht darin, dass zum einen der Reibring und das Anbindungselement in direktem Kontakt stehen, was insbesondere bei unterschiedlichen Werkstoffen zu Korrosionen führen kann. Andererseits ist auch hier keine radiale Ausdehnung gewährleistet.

Die Aufgabe der Erfindung besteht darin, eine Anbindung zwischen einem Reibring und einem Anbindungselement in der Art darzustellen, dass sowohl eine radiale als auch eine axiale Ausdehnung gewährleistet ist, wobei eine Korrosion zwischen dem Anbindungselement und dem Reibring unterbunden wird.

Die Lösung der Aufgabe besteht in den Merkmalen des Anspruchs 1. Der erfindungsgemäße Anspruch 1 beschreibt eine Bremsscheibe mit einem Reibring und einem Anbindungselement, die durch eine Verschraubungsanordnung miteinander verbunden sind. Die Verschraubungsanordnung umfasst dabei eine Schraube, eine Mutter und ein Zwischenelement, wobei das Zwischenelement so angeordnet ist, dass ein direkter Kontakt zwischen dem Reibring und dem Anbindungselement verhindert wird. Die Erfindung zeichnet sich dadurch aus, dass ein Gleitstein vorgesehen ist, der gegebenenfalls zumindest teilweise über ein Hülsenelement gesteckt ist. Das Zwischenelement ist derart angeordnet, dass es den Gleitstein zumindest teilweise umschließt. Dabei ist das Zwischenelement so ausgestaltet, dass es eine federnde Wirkung zwischen dem Reibring und dem Anbindungselement in axialer Richtung ausübt.

Das Zwischenelement verhindert erfindungsgemäß einen Kontakt zwischen dem Reibring und dem Anbindungselement. Dadurch wird eine Korrosion zwischen diesen beiden Bauteilen verhindert. Dies ist insbesondere dann von Vorteil, wenn der Reibring beispielsweise aus einem keramischen Material besteht und das Anbindungselement aus einer Aluminiumlegierung besteht. In diesem Fall verhindert das Zwischenelement auch lokale Deformationen im Anbindungselement, die bei höheren Temperaturen auftreten könnten. Gleichzeitig gewährleistet das Anbindungselement durch seine federnde Wirkung in axialer Richtung eine axiale Ausdehnung zwischen Reibring und Anbindungsteil.

Der Gleitstein hingegen ist so ausgestaltet, dass eine wärmebedingte Ausdehnung von Reibring und Anbindungsteil in radialer Richtung möglich ist. Somit hat der Bremsscheibenverbund von Reibring und Anbindungsteil Freiheitsgrade in axialer und radialer Richtung, wodurch mechanische Belastungen, die während des Bremsens auf den Reibring wirken, stark reduziert werden.

In einer zweckmäßigen Ausgestaltung der Erfindung weist der Reibring einen umlaufenden Befestigungsring im Inneren auf. Dieser Befestigungsring ist mit Befestigungsbohrungen versehen. Dieser innere Befestigungsring ist dazu eignet, das Anbindungselement an den Reibring anzuschrauben.

Das Anbindungselement weist ebenfalls in radialer Richtung längliche Ausnehmungen auf. Diese länglichen Ausnehmungen können einerseits nach außen hin geöffnet sein und somit eine Art Zinnenform aufweisen, andererseits können die Ausnehmungen auch in Form eines Langloches ausgestaltet sein. Die länglichen Ausnehmungen gewährleisten eine radiale Ausdehnung der Verschraubungsanordnung in der Art, dass sich der Gleitstein, der in den länglichen Ausnehmungen eingehängt ist, radial ausreichend bewegen kann.

In einer Ausgestaltung der Erfindung ist das Zwischenelement U-förmig ausgestaltet. Dabei weisen Längsseiten des U-förmigen Zwischenelementes Falze auf, die zum Eingriff in die Ausnehmungen des Anbindungselementes geeignet sind. Durch die U-förmige Gestaltung des Zwischenelementes und durch die Falze wird einerseits gewährleistet, dass das Zwischenelement sicher in den Ausnehmungen des Anbindungselementes festsitzt und andererseits wird gewährleistet, dass kein direkter Kontakt zwischen dem Anbindungselement und dem Reibring auftritt.

In der Erfindung weisen die Falze des Zwischenelementes federnde Ausformungen auf. Diese federnden Ausformungen der Falze gewährleisten die federnde Wirkung des Zwischenelementes in axiale Richtung. Hierin besteht der Vorteil, dass es in einfacher Weise aus einem Stahlblech ausgestanzt und gebogen werden kann, was die Produktionskosten erheblich reduziert.

Vorteilhafte Ausgestaltungsformen der Erfindung werden im Folgenden durch die Figuren näher erläutert. Dabei zeigen:
- Fig. 1: einen Schnitt durch eine Bremsscheibe mit einem Reibring und einem Anbindungsteil im Bereich der Verschraubungsanordnung,
- Fig. 2: eine perspektivische Darstellung eines Zwischenelementes,
- Fig. 3: ein Zwischenelement, das in die länglichen Ausnehmungen des Anbindungselementes eingesetzt ist,
- Fig. 4: ein Zwischenelement, das in die länglichen Ausnehmungen des Anbindungselementes eingesetzt ist mit radialer Federung.

Bei der erfindungsgemäßen Bremsscheibe, die einen Reibring 2 und ein Anbindungselement 4 umfasst, handelt es sich um eine Bremsscheibe mit üblicher Bauweise. Dabei weist der Reibring 2 eine hier nicht dargestellte Innenbelüftung auf, die von zwei Reibflächen, die ebenfalls nicht dargestellt sind, begrenzt werden. Auf diesen Reibflächen werden (nicht dargestellte) Bremsbeläge bewegt, die die Bremswirkung verursachen.

Bevorzugt kann der Reibring aus einem kohlestofffaserverstärkten Keramik dargestellt sein. Dabei handelt es sich beispielsweise um eine kohlenfaserverstärkte Siliziumkarbidkeramik (C/SiC). Derartige keramische Materialien weisen eine hohe Verschleißbeständigkeit und eine sehr hohe Temperaturbeständigkeit auf. Ihre mechanischen Festigkeiten ragen jedoch nicht ganz an die des herkömmlichen Graugusses heran.

Ebenfalls ist aus ökonomischen Gesichtspunkten die Geometrie dieser Reibringe möglichst einfach zu halten. Aus diesem Grund wird eine Bremsscheibe aus einem C/SiC-Material, bevorzugt zweiteilig, so ausgestaltet, dass der Reibring 2 an ein Anbindungselement 4 angebunden wird. Das Anbindungselement 4 wird in der Fachsprache auch Bremsscheibentopf genannt.

Das Anbindungselement 4 besteht bevorzugt aus einer Aluminiumlegierung, die den Gewichtsvorteil, der bereits durch den sehr leichten Reibring erzeugt wird, gegenüber einer herkömmlichen Graugussbremse noch weiter optimiert.

Durch die unterschiedlichen Werkstoffe, Keramik im Reibring und Aluminium im Anbindungselement 4, werden durch die sehr hohen Temperaturen, die bei dem Bremsvorgang auftreten, unterschiedliche Ausdehnungen der einzelnen Bauelemente verursacht. Zur Vermeidung von mechanischen Spannungen, die somit unweigerlich auftreten würden, bedarf es einer besonderen Anbindung zwischen dem Reibring 2 und dem Anbindungselement 4.

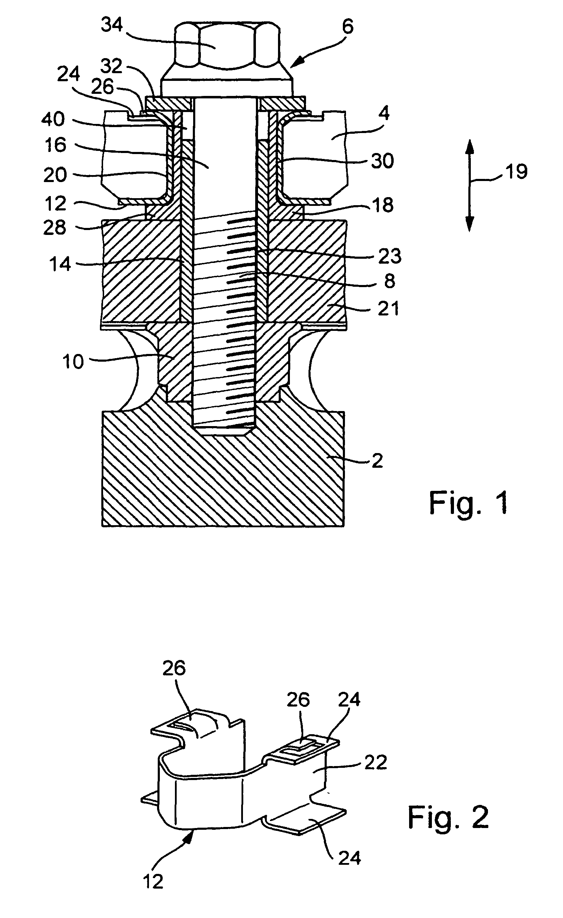

Eine derartige Verschraubungsanordnung 6 ist in Figur 1 näher dargestellt. Die Verschraubungsanordnung 6 umfasst eine Schraube 8 mit einem Schaft 16, der durch eine Mutter 10 gekontert wird. Die Verschraubungsanordnung verläuft durch eine längliche Ausnehmung 20 im Anbindungselement 4 und durch eine Befestigungsbohrung 23, die in einem inneren Befestigungsring 21 des Reibrings 2 angeordnet ist. Über dem Schaft 16 der Schraube 8 ist ein Hülsenelement 14 angeordnet, das einen direkten Kontakt zwischen der Bohrung 23 und der länglichen Ausdehnung 20 und dem Schraubenschaft 16 verhindert. Über dem Hülsenelement 14 ist wiederum ein Gleitstein 18 angeordnet. Der Gleitstein 18 ist im Wesentlichen zylindrisch ausgestaltet, weist jedoch zwei parallele Flächen 30 auf, die so angeordnet sind, dass sie in die länglichen Ausnehmungen 20 des Anbindungselementes 4 hineingleiten können. Die parallelen Aussparungen 30 des Gleitsteins 18 erzeugen wiederum Absätze 28 im Gleitstein, die, wie in Figur 1 dargestellt ist, als Abstandshalter zwischen dem Anbindungselement 4 und dem inneren Befestigungsring 21 des Reibringes 2 dienen.

Weiterhin ist ein Zwischenelement 12 vorgesehen, das um die länglichen Ausnehmungen 20 des Anbindungselementes 4 angeordnet ist. Das Zwischenelement 12 selbst ist in Figur 2 näher dargestellt. Das Zwischenelement 12 ist im Wesentlichen U-förmig ausgestaltet, es weist an seinen Längsseiten 22 Falze 24 auf. Im vorliegenden Beispiel aus Figur 2 sind aus den Falzen 24 federnde Ausformungen 26 ausgestanzt. Diese federnden Ausformungen 26 drücken, wie in Figur 1 dargestellt ist, auf eine Unterlegscheibe 32, die wiederum im direkten Kontakt mit einem Schraubenkopf 34 steht. Die federnden Ausformungen 26 bewirken, dass die gesamte Verschraubungsanordnung 6 inklusive des Reibrings 2 und des Anbindungselementes 4 in axiale Richtung ein Spiel zur Ausdehnung hat. Kommt es zu axialen thermischen Ausdehnungen im Bereich der Verschraubungsanordnung 6, so werden diese durch die federnden Ausformungen 26 ausgeglichen.

Eine weitere Ursache, die ein axiales Spiel der Verschraubung zweckmäßig macht, liegt in der Wirkungsweise eines, hier nicht dargestellten Bremssattels. Der Bremssattel ist bzgl. der Bremsscheibe einseitig starr aufgehängt. Während der Bremsung wird ein Bereich des Bremssattels gegen die Scheibe gedrückt. Somit wirkt stets ein axiales Moment auf Bremsscheibe, Reibring 2, Anbindungselement 4 und Verschraubungsanordnung 6. Zum Ausgleich durch dieses axiale Moment erzeugten Spannungen, ist ein axiales Spiel in der Verschraubungsanordnung 6 zweckmäßig, das wiederum durch die federnden Ausformungen 26 ausgeglichen wird.

Eine weitere vorteilhafte Wirkung der Erfindung liegt in der radialen Bewegungsfreiheit des Gleitsteines 18. In der Schnittzeichnung der Figur 1 verläuft diese Bewegungsrichtung des Gleitsteines senkrecht zur Zeichenebene.

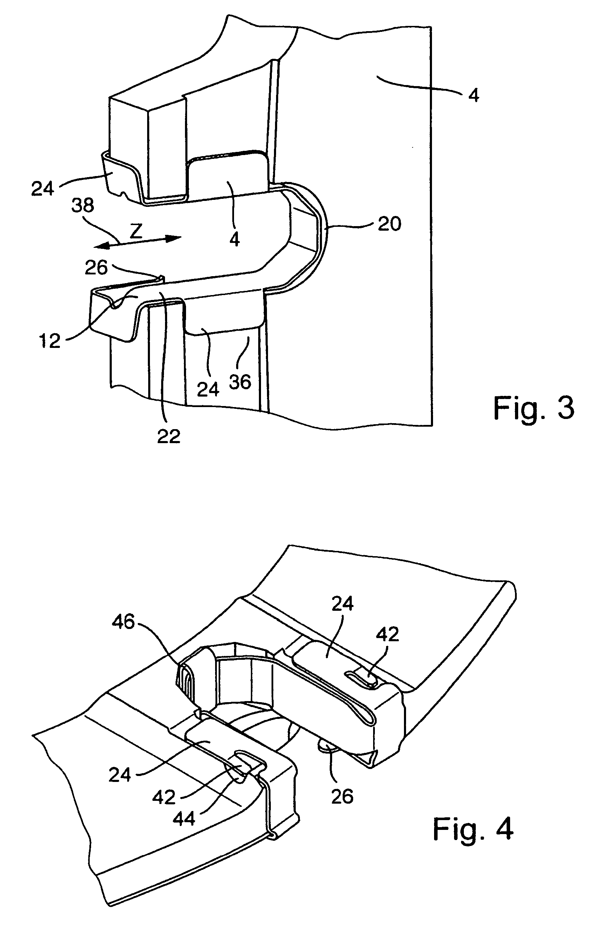

In Figur 3 ist eine längliche Ausnehmung 20 in das Zwischenelement 12 eingeschoben. Die U-förmige Ausgestaltung des Zwischenelementes 12 ist an die Form der länglichen Ausnehmungen 20 angepasst. Die Falze 24 des Zwischenelementes 12 sind so gebogen, dass sie über Begrenzungen 36 der Ausnehmungen 20 liegen und somit das Zwischenelement 12 in axialer und radialer Richtung in den Ausnehmungen 20 fixiert ist. Dabei ist anzumerken, dass das Zwischenelement 12 in Figur 3 nicht identisch mit dem Zwischenelement 12 der Figur 2 ist. Es handelt sich bei dem Zwischenelement 12 aus Figur 3 lediglich um eine andere vorteilhafte Ausgestaltungsform.

Ein weiteres Beispiel für die Darstellung eines Zwischenelementes 12 ist in Fig. 4 gegeben. In dieser Form wird das Zwischenelement 12 gegen radiale Verschiebungen durch eine Sicherung 42 im Anbindungselement 4 gesichert. Dabei wird das Zwischenelement 12 bei der Montage in die Ausnehmung 20 des Anbindungselementes 4 geschoben, wenn es die richtige Position erreicht hat, schnappen Bereiche 42 der Falze 24 hinter der Sicherung 44 im Anbindungselement 4 ein. Dabei kann es sich bei der Sicherung 42 um eine Vertiefung im Anbindungselement 4 oder um eine Erhöhung im Anbindungselement 4 handeln. Handelt es sich um eine Vertiefung, so sind die Bereiche 44 in Richtung des Anbindungselementes 4 aus den Falzen 24 herausgebogen.

Zusätzlich gewährleistet eine radiale Federung 46 des Zwischenelementes am unteren Ende des u-förmigen Zwischenelementes 12 einen festen Sitz des Zwischenelementes 12 in der Ausnehmung 20.

Die radiale Sicherung (42, 44) des Zwischenelementes 12 gewährleistet gemeinsam mit der radialen Federung 46, dass das Zwischenelement 12 bezüglich des Anbindungselementes 4 ortsfest bleibt. Radiale Relativbewegungen (hervorgerufen durch thermische Ausdehnungen des Anbindungselementes 4 und des Reibrings 2)) finden zwischen dem Gleitstein 18 und dem Zwischenelement 12 statt. Hierdurch werden Materialabtragungen im relativ weichen Material des Anbindungselementes 4 (in der Regel eine Aluminiumlegierung) verhindert. Derartige Materialabtragungen könnten gegebenenfalls eine Geräuschentwicklung der Bremse zur Folge haben.

Die parallelen Flächen 30 des Gleitsteins 18 liegen an den ebenfalls parallelen Längsseiten 22 des Zwischenelementes 12 an. Der Gleitstein 18, der in Figur 3 der Übersichtlichkeit halber nicht dargestellt ist, kann sich nun bei einer radialen Ausdehnung des Reibrings 2 und des Anbindungselementes 4 entlang der radialen Richtung 38 parallel zu den Längsseiten 22 des Zwischenelementes bewegen. Die radiale Richtung 38 entspricht in Figur 1 einer Senkrechten zur Zeichnungsebene. Es ist dabei zu bemerken, dass längliche Ausnehmungen 20 im vorliegenden Beispiel nur im Anbindungselement 4 vorgesehen sind. Der Reibring 2, der einen inneren Befestigungsring 21 umfasst, in dem wiederum die Befestigungsbohrungen 23 vorgesehen sind, weist in dieser Ausgestaltungsform kreisförmige Bohrungen auf, die keine radiale Bewegung zulassen. Die radiale Bewegung erfolgt demzufolge ausschließlich in den länglichen Ausnehmungen 20 des Anbindungselementes 4. Die radiale Ausdehnung der Verschraubungsanordnung 6 wird durch den Gleitstein 18 gewährleistet.

Es ist grundsätzlich möglich, dass die länglichen Ausnehmungen zum Ausgleich des radialen Spieles durch ein Langloch im Anbindungselement 4 dargestellt werden. Ebenfalls kann es zweckmäßig sein, dass Ausnehmungen im Anbindungselement 4 kreisförmig ausgestaltet sind und der radiale Ausgleich durch längliche Ausnehmungen oder Langlöcher im Befestigungsrings 21 des Reibring 2 erfolgt.

Das Zwischenelement 12 kann aus einem federnden Edelstahl dargestellt werden. Es hat hierbei noch die zusätzliche Wirkung, dass das relativ weiche Aluminiummaterial des Anbindungselementes 4 bei hoher Temperatur und durch eine hohe Vorspannung der Verschraubungsanordnung 4 nicht in das relativ harte Material des Schraubenkopfes bzw. der Unterlegscheibe 32 hineingedrückt wird. Die federnde Wirkung des Zwischenelementes 12 verhindert somit irreversible Materialverformungen im Anbindungselement 4.

Wie in Figur 1 dargestellt ist, ist das Hülsenelement 14 etwas kürzer als der gesamte Abstand zwischen der Unterlegscheibe 32 und der Mutter 10. Dies ist nötig, damit das Hülsenelement nicht zusammengequetscht wird, wenn die Verschraubungsanordnung 6 befestigt wird. Das verbleibende Spiel des Hülsenelementes 14 entlang des Schaftes 16 der Schraube kann zwischen 1 mm und 6 mm betragen. Somit liegt der Gleitstein 18 nicht über seiner gesamten Länge auf dem Hülsenelement 14. Es verbleibt ein Luftspalt 40 zwischen Schaft 16 der Schraube und dem Gleitstein 18. Der Luftspalt 40 ist jedoch nur so groß, dass der Gleitstein 18 im Wesentlichen durch das Hülsenelement 14 vom Schaft 16 der Schraube 8 getrennt ist, ohne zu verkanten. Es ist auch möglich, den Gleitstein 18 als ein Stück mit dem Hülsenelement 14 auszugestalten. Eine zweiteilige Ausgestaltung ist jedoch kostengünstiger.

## Patentansprüche

1. Bremsscheibe mit einem Reibring (2), aus einer kohlenstofffaserverstärkten Keramik, einem Anbindungselement (4) aus einer Aluminiumlegierung und einer Verschraubungsanordnung (6) zur Verbindung von Anbindungselement (4) und Reibring (2), wobei die Verschraubungsanordnung (6) eine Schraube (8), eine Mutter (10) und ein Zwischenelement (12) umfasst, das einen direkten Kontakt von Reibring (2) und Anbindungselement (4) verhindert,
**dadurch gekennzeichnet,**
• **dass** das Zwischenelement (12) im Wesentlichen U-förmig ausgestaltet ist, sowie an seinen Längsseiten (22) Falze (24) zum Eingriff in die Ausnehmungen (20) mit federnden Ausformungen (26, 42) aufweist, wobei das Zwischenelement eine federnde Wirkung zwischen dem Reibring (2) und dem Anbindungselement (4) in axialer Richtung ausübt
• **dass** die Falze (24) so über Begrenzungen (36) der Ausnehmungen (20) gebogen liegen, dass das Zwischenelement auch in radialer Richtung in den Aussparungen (20) fixiert ist
• und **dass** das Zwischenelement (12) den Gleitstein (18) zum Ausgleich einer radialen Bewegung des Reibrings (2) und des Anbindungselementes (4) zumindest teilweise umschließt.

2. Bremsscheibe nach Anspruch 1,
**dadurch gekennzeichnet,**
**dass** der Reibring (2) einen inneren umlaufenden Befestigungsring (21) aufweist, der mit Befestigungsbohrungen (23) versehen ist.

3. Bremsscheibe nach Anspruch 1 oder 2,
**dadurch gekennzeichnet,**
**dass** das Anbindungselement (4) in radiale Richtung längliche Ausnehmungen (20) zur Aufnahme der Verschraubungsanordnung (6) aufweist.

4. Bremsscheibe nach einem der vorhergehenden Ansprüche,
**dadurch gekennzeichnet,**
**dass** das Zwischenelement (12) eine radiale Federung (46) bezüglich des Anbindungselementes (4) umfasst.

## Claims

1. Brake disc comprising a friction ring (2) made of a carbon fibre reinforced ceramic material, a linking element (4) made of an aluminium alloy and a bolting arrangement (6) for joining the linking element (4) and the friction ring (2), the bolting arrangement (6) comprising a bolt (8), a nut (10) and an intermediate element (12) preventing a direct contact between the friction ring (2) and the linking element (4),
**characterised in that**
• the intermediate element (12) is designed substantially U-shaped and is on its long sides (22) provided with lips (24) for engagement with the recesses (20) with resilient shapings (26, 42), wherein the intermediate element provides a resilient effect between the friction ring (2) and the linking element (4) in the axial direction,
• the lips (24) are bent over boundaries (36) of the recesses (20) in such a way that the intermediate element is located in the recesses (20) in the radial direction as well,
• and the intermediate element (12) at least partially encloses the slider (18) to compensate a radial movement of the friction ring (2) and the linking element (4).

2. Brake disc according to claim 1,
**characterised in that**
the friction ring (2) comprises an inner continuous mounting ring (21) provided with mounting holes (23).

3. Brake disc according to claim 1 or 2,
**characterised in that**
the linking element (4) has oblong recesses (20) in the radial direction to accommodate the bolting arrangement (6).

4. Brake disc according to any of the preceding claims,
**characterised in that**
the intermediate element (12) includes radial springing (46) with respect to the linking element (4).

## Revendications

1. Disque de frein avec une bague de friction (2), en céramique renforcée par des fibres de carbone, un élément de raccordement (4) en alliage d'aluminium et un dispositif à filetage (6) pour relier l'élément de raccordement (4) et la bague de friction (2), le dispositif à filetage (6) comprenant une vis (8), un écrou (10) et un élément intermédiaire (12) qui empêche un contact direct de la bague de friction (2) et de l'élément de raccordement (4), **caractérisé en ce que**
• l'élément intermédiaire (12) est conçu essentiellement en forme de U et présente également sur ses côtés longitudinaux (22) des pliures (24) avec des formations en relief (26, 42) à effet de ressort destinées à s'encastrer dans les évidements (20), l'élément intermédiaire exerçant un effet élastique entre la bague de friction (2) et l'élément de raccordement (4) en direction axiale
• les pliures (24) cintrées sont disposées sur les délimitations (36) des évidements (20) de manière telle que l'élément intermédiaire soit également fixé dans les évidements (20) en direction radiale et
• l'élément intermédiaire (12) entoure au moins partiellement le patin (18) pour compenser un mouvement radial de la bague de friction (2) et de l'élément de raccordement (4).

2. Disque de frein selon la revendication 1, **caractérisé en ce que** la bague de friction (2) présente une bague de fixation périphérique intérieure (21) qui est munie d'alésages de fixation (23).

3. Disque de frein selon la revendication 1 ou 2, **caractérisé en ce que** l'élément de raccordement (4) présente en direction radiale des évidements allongés (20) destinés à accueillir le dispositif à filetage (6).

4. Disque de frein selon l'une quelconque des revendications précédentes, **caractérisé en ce que** l'élément intermédiaire (12) comprend une suspension à ressort radiale (46) par rapport à l'élément de raccordement (4).
